# EUROPEAN PATENT APPLICATION

(11) **EP 1 349 080 A1**
(43) Date of publication of application: **01.10.2003**
(21) Application number: 02006866.4
(22) Date of filing: 26.03.2002
(51) Int. Cl.: G06F 17/30, H04N 5/00, G11B 27/28

(54) **Methods and apparatus for using metadata from different sources**

(71) Applicant: DEUTSCHE THOMSON-BRANDT GMBH, 78048 Villingen-Schwenningen (DE)
(72) Inventor: Adolph, Dirk, 30952 Ronnenberg (DE); Li, Hui, 30419 Hannover (DE); Peters, Hartmut, 30890 Barsinghausen (DE); Blawat, Meinolf, 30161 Hannover (DE); Schiller, Harald, 30539 Hannover (DE)
(74) Representative: Thies, Stephan

(57) **Abstract**

Metadata from different sources are used to organize recordings, search for content and access specific recordings. Due to different metadata sources using different standards, the metadata have different semantics and syntax. According to the invention, from the original metadata received from the different sources unified metadata are derived using one or more transformation rules. The transformation rules specify how the content or parts of the content of said original metadata shall be used to constitute the content or part of the content of said unified metadata. The derived unified metadata are presented to a user and processed in response to a user input.

## Description

The invention relates to a method and to an apparatus for using metadata from different sources, especially for organizing of recordings, searching for content and accessing specific recordings.

### Background

The capacity of digital storage media for personal video recording grows continuously. Currently it is possible to store about 20 full-length movies on a single 100 gigabyte (GB) hard disk. In 2005, it will likely be possible to store about 80 movies on a single 400 GB hard disk.

Similarly, the capacity of exchangable storage media is expanding. DVDs containing full-length movies are widely available and also rewritable DVDs (DVD-RAM, DVD-RW, DVD+RW) are on the market, having a storage capacity of 4.7 GB. Furthermore, the basic specification for a next generation of large capacity optical discs called "Blu-ray Disc" has recently been established, enabling the recording, rewriting and playback of up to 27 GB of data on a single sided single layer disc. In order to further increase the capacity, two or more layers may be used per side and these may be applied to both sides of the disc. Finally, several discs may be combined in a special magazine.

This enormous amount of data requires new ways to organize the recordings, search for content and access specific recordings. One possible solution for this is to use so-called metadata, defined as data about data, for the recorded content. Various industry groups and standard bodies have been developing metadata standards for different purposes and applications. In the context of metadata usage, the content to which metadata are related is often called "essence".

The compression standards for AV streams MPEG-1, MPEG-2 and MPEG-4 already contain some program specific information (PSI), specified in the respective MPEG systems standard. Similarly, the DVB standard used for the transmission of digital television signals specifies Service Information (DVB-SI) included in a DVB compliant MPEG-2 transport stream multiplex.

More recently, the TV-Anytime Forum defined in the specification S-3 on Metadata, document number SP003v1.1 metadata which allow the consumer to find, navigate and manage content from a variety of internal and external sources including, for example, enhanced broadcast, interactive TV, Internet and local storage. Additionally, these metadata may also include information about user preferences, such as favorite actors or TV shows, which facilitate automatic filtering and acquisition of content by agents on behalf of the consumer.

Similarly, an MPEG standard for the effective and efficient access to multimedia content is currently under development [ISO/IEC 15938: Information Technology -- Multimedia content description interface]. This MPEG-7 standard will offer metadata elements and their structure and relationships, that are defined in the form of Descriptors and Description Schemes to create descriptions of the multimedia content.

### Invention

The invention is based on the recognition of the following fact. Often several different metadata describing the same content may be available. However, these metadata may have different associated meanings (semantics) and ways of coding (syntax), which are defined in the respective standards, e.g. the MPEG-7 or TV-Anytime standard. On the other hand, in systems planning to employ metadata, certain semantics and syntax of metadata or metadata fields will be more appropriate than others, depending on the properties and features the system shall be able to perform. Therefore, it is desirable to allow the use of all available metadata, despite their different semantics and syntax.

Therefore, a problem to be solved by the invention is to allow the use of metadata originating from different sources having different semantics or syntax.

This problem is solved by the method disclosed in claim 1. An apparatus that utilizes this method is disclosed in claim 8.

According to the invention original metadata are received from different sources and unified metadata are derived from said original metadata using one or more transformation rules, wherein the transformation rules specify how the content or parts of the content of said original metadata shall be used to constitute the content or part of the content of said unified metadata.

Advantageously, the derived unified metadata are presented to a user and are processed in response to a user input.

Advantageously, the processing results in selecting, deleting or modifying said unified metadata.

Furthermore, it is of advantage to store the original metadata, keep the stored original metadata unchanged and enable to recurr from the unified metadata to the original metadata.

For the transformation rules, it is advantageous to base them on formal and/or structural properties of the original metadata in all cases where the original metadata are themself structured.

For unstructured original metadata of textual nature, it is advantageous to base the transformation rules on a similarity measure which allows for a tolerant matching of phrases against a user-defined search phrase.

According to a further advantageous embodiment a part of the transformation rules covers the mapping or inheritance of the essence links from within the original metadata into all derived unified metadata.

Further advantageous embodiments of the invention result from the following description.

### Drawing

Exemplary embodiments of the invention are described with reference to the accompanying drawings, which show in:
- Fig. 1: generically the conversion of original metadata records with different syntax and semantics into unified metadata records;
- Fig.2.: a block diagram of the processing of metadata including the derivation of unified metadata from received original metadata.

### Exemplary embodiments

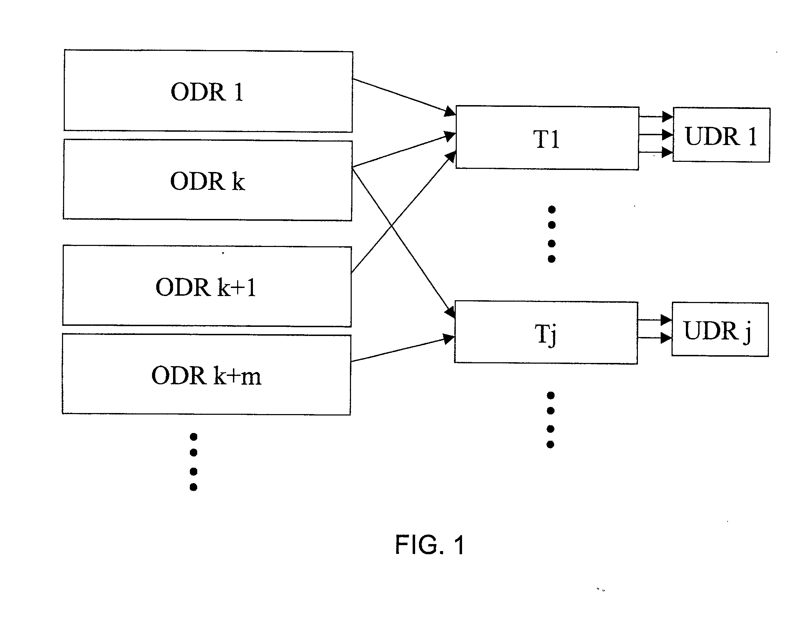

Figure 1 shows generically the conversion of original metadata records with different syntax and semantics into unified metadata records, in the following also called Core Metadata. Transformations T1,..., Tj,... specify rules how the content or parts of the content of the original metadata records of a predetermined class shall be used to constitute the content or part of the content of a unified metadata record. In Figure 1, the blocks "ODR1" to "ODRk+m" symbolize different classes of original metadata records, and more specifically, it shall be assumed that blocks ODR1 and ODRk both are governed by one specific syntax/semantics, whereas blocks ODRk+1 and ODRk+m are governed by a second, different syntax/semantics. All original metadata records of class ODR1 are converted by a set of transformations T1 into instances of a first class of unified metadata records UDR1. As part of this conversion, the transformation T1 may mandate the presence of certain parts within the instance of ODR1, so that by applying T1, not all instances of ODR1 will actually generate an output UDR1. Also, it must be kept in mind, that the conversion described by T1 may mandate that only certain parts of the instance of ODR1 shall be taken to constitute certain parts of the emerging instance of UDR1. Similarly, the same set of transformations T1 may contain a rule which defines that, under certain conditions, some predefined parts of instances of a second class of original metadata records ODRk are converted into other instances of the first kind of unified metadata records UDR1. However, other instances of the second class of original metadata ODRk, if they contain certain other parts, are converted by a different set of transformations Tj into instances of a second class of unified metadata records UDRj. Similarly, further original metadata records of classes ODRk+1 and ODRk+m having a syntax/semantics according to a second standard are converted by the transformations T1 and Tj into instances of the first and second unified metadata records UDR1 and UDRj. In this way, when a sufficient number of original metadata is available and the respective transformation rules are applied, several candidates will be generated for each kind of Core Metadata. In this way, a user has sufficient material from which he can editorially distill the Core Metadata he finally wants.

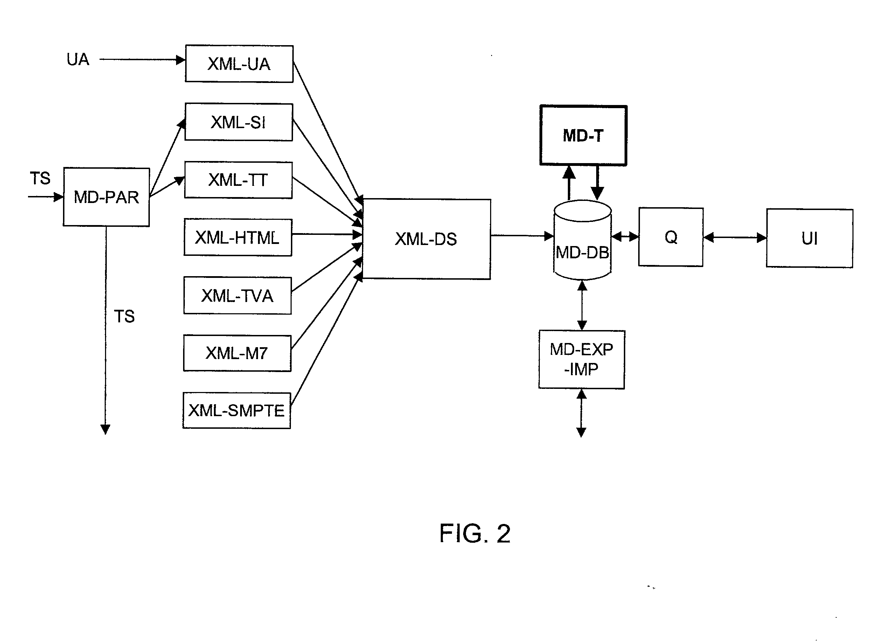

Figure 2 shows an example for the derivation of Core Metadata from originally received metadata as part of an overall metadata processing chain. Although the further description concentrates on the processing of an MPEG-2 transport stream, it can easily be generalised for use in any system using multiplexed bitstreams comprising metadata.

When recording a broadcast DVB transport stream TS additional service information encompassed in the multiplex besides the audio and video signals is parsed from the multiplex. For this purpose the broadcast signal is analyzed for metadata like teletext, DVB-SI etc. by a DVB metadata parser MD-PAR and the detected metadata are demultiplexed and extracted.

The extracted metadata are transformed into XML metadata descriptors XML-DS. This XML representation for the metadata descriptors allows to have a generic framework for different kinds of metadata descriptors. In other words, the metadata database MD-DB can store any kind of metadata as long as there is a transformer that converts it from its native representation into the XML representation. Similarly it is possible to perform queries on the metadata, independent of their respective metadata sources.

There are different transformers for different metadata sources, like e.g. a transformer XML-SI for the transformation of DVB-SI data or a further transformer XML-TT for the transformation of Teletext or Closed Caption data. The transformers transform the metadata from their native coding, e.g. DVB-SI binary format, into an XML representation. This transformation is keeping the information inside the metadata "as is". It neither adds nor removes information. This allows a very flexible later use of the metadata. During recording the metadata descriptors are accumulated and stored into the metadata database MD-DB.

Similarly, metadata descriptors generated manually by the user such as user-annotations UA may be stored after they have been transformed by a transformer XML-UA into XML representation. Furthermore, metadata descriptors according to other standards like HTML, TV-Anytime, MPEG-7 or SMPTE are transformed by respective transformers XML-HTML, XML-TVA, XML-M7 or XML-SMPTE and stored. These metadata descriptors may be received via the same or other transmission paths like the Internet.

An archive system may also store metadata descriptors originating from other recording devices and/or storage media. However, this necessitates an export and import facility MD-EXP-IMP for metadata descriptors, such that metadata descriptors can be exchanged between devices and/or media.

In order to use the metadata descriptors stored in the metadata database MD-DB the inventive conversion of the original metadata into Core Metadata CM has to be performed using specific transformation rules MD-T. Here is where it becomes beneficial that the metadata is stored "as is". No information has been added or removed from the complete set of metadata information that is available.

Finally, access may be provided to all metadata via a user interface UI with query and browsing techniques Q for finding the corresponding video/audio stream or metadata the selected metadata descriptor is pointing to.

One example of the conversion of the original metadata into Core Metadata is the conversion of different metadata items into title information for a given recording. Often the title information is the most useful and versatile single metadata item when it comes to archiving, searching and sorting of any kind of AV material. For all material, be it self recorded (e.g. with a camcorder), or recorded from broadcast, or be it on canned media, mostly everybody will be able to associate a *Title* with it, under which the material can, on one hand, be recognized for later search, but, on the other hand, can also be sufficiently differentiated, if necessary, against other material which might be closely similar.

Corresponding to this very intuitive notion of *Title,* many existing metadata systems comprise items which constitute a container for *Titles,* although they may come under different names and have distinct syntaxes.
- DVB, in its "DVB-SI" system of Service Information, defines a "short event descriptor" which *"provides the name of the event and a short description of the event in text form".* The syntax of the short event descriptor foresees two variable length text fields: a dedicated one for the *"event_name",* and another one to *"specify the text description of the event".*
- MPEG-7, in its *"Creation Description Scheme",* has the notion of "Title", as *"the name of an audio-visual program".*
- TVAnytime, in its work on Electronic Program Guides, mentions the concepts of "Title" as *"Textual title of the program (...) Multiple title descriptors may be included".* Similar concepts of *"Episode Title"* and *"Series Title"* exist.
- Any container for any kind of User Annotations might always happen to be used for a user-specific *Title* of a piece of AV material.

Correspondingly, a Core Metadata scheme according to the present invention, will have one class of Core Metadata named *"Title",* and all the above mentioned given metdata should be used as input to derive *"Title"* candidates, because - depending on what they contain - they might contain good material to be used for the above mentioned intuitive notion of "*Title*". Hence, the Core Metadata scheme will define transformation rules for each of the metadata above, specifying in each case which part of the content should be inserted as the content of the derived Core Metadata item. The Core metadata scheme may then provide tools such that the user can inspect all the "Title" candidates, select one of them and/or edit their content as to match his/her personal preference.

An even more illustrate example for the derivation of *"Title"* candidates could be as follows. EPG data are transmitted according to the TV-Anytime standard and are received by a TV receiver or set top box. A user invokes a display of the EPG on a television screen and selects a television program in the displayed EPG based on the displayed title. The title information according to the TV-Anytime standard is separated and stored as a first candidate of the Core MD "title". After tuning the TV receiver to the selected channel, the SI-information within the DVB signal is analyzed and a second title information is separated and stored as a second candidate. Furthermore, the teletext signal received on the received channel is checked for information about the current program, which is stored as third title candidate. Since the stored title information is based on different standards, different transformations are applied to the title informations in order to convert them all into the same format. All converted title informations are stored, and at any convenient later time, they can be displayed to the user and the user then can select the "best" title information. For example, for a long title two of the three title informations may happen to be abbreviated versions while only the third one may happen to be complete. The user may in this case select the complete title information for future overviews of his recordings.

Metadata being defined as "data about data", a constituent part of any original metadata will always be an essence link, by which the metadata points to an AV essence. From this it is obvious, that parts of the transformation rules MD-T will advantageously describe the details how the essence links found on an input metadata shall be duplicated in order to appear on the derived Core Metadata, too. In addition to essence links, an original metadata may also contain "origin links" specifying where the original metadata was received or extracted from. Assuming that Core Metadata, too, may have such an "origin link", another part of the transformation rule MD-T may describe how this Core Metadata origin link shall be set, one possible solution being that this link points to the original metadata from which the core metadata was generated.

For original metadata which are themself structured, like those according to the DVB-SI or TV-Anytime standard, the transformation rules MD-T will typically select only certain kinds of metadata for further processing, will test for the presence of certain optional structural parts of the input metadata, will potentially check some parts whether they have prescribed values, and, conditional on these preconditions being met, the transformation will extract a certain subset of the input metadata and embed it in a certain position of the output Core Metadata to be generated.

For other input metadata, especially those which are unstructured except being indicated as "textual", a transformation rule MD-T may typically consist in evaluating a phrase similarity measure between the input metadata and some user-provided search phrase. Such a phrase similarity measure should advantageously be made tolerant against slight variations of grammar or wording, which can be achieved by evaluating word order and word distance, and by additionally converting all words to be compared into word stems using algorithms known in the art as "stemming".

The invention is especially useful for personal video recording, e.g. for the search and access of specific recordings on high-volume storage media. However, the invention is also applicable to all other kinds of electronic multimedia content referencing and content location. The recorded content may be movies and television programs but also every other form of audiovisual information, such as arbitrary combinations of still pictures, graphics, 3D models, audio, speech and video.

## Claims

1. Method for using metadata from different sources, said metadata describing and being linked to multimedia essence and being used for accessing said multimedia essence, **characterized by**
- receiving original metadata from different sources;
- deriving from said original metadata unified metadata using one or more transformation rules, said transformation rules specifying how the content or parts of the content of said original metadata shall be used to constitute the content or part of the content of said unified metadata.

2. Method according to claim 1, further **characterized by**
- presenting said derived unified metadata to a user;
- processing said derived unified metadata in response to a user input.

3. Method according to claim 2, wherein said processing results in selecting, deleting or modifying said unified metadata.

4. Method according to any of claims 1 to 3, further **characterized by**
- storing the original metadata;
- keeping the stored original metadata unchanged; and
- enabling to recurr from the unified metadata to the original metadata.

5. Method according to any of claims 1 to 4, wherein said original metadata contain links, and where a part of said transformation rules covers the mapping or inheritance of said links from within said original metadata into all derived said unified metadata.

6. Method according to any of claims 1 to 5, wherein said original metadata are at least partly structured and where said transformation rules are at least partly based on examining and evaluating the structure of said original metadata.

7. Method according to any of claims 1 to 5, wherein said original metadata at least partly consist of sequences of words not otherwise structured, where said transformation at least partly involves a search phrase, where said transformation rules are at least partly based on evaluating a phrase similarity measure, where said phrase similarity measure is based on word order and/or word distance measures, and where, prior to applying said phrase similarity measure, the words of said original metadata and of said search phrase are optionally normalized by applying a stemming algorithm.

8. Apparatus for using metadata from different sources, said metadata describing multimedia essence and being used for accessing said multimedia essence, **characterized in**
- means for receiving original metadata from different sources;
- means for deriving from said original metadata unified metadata using one or more transformation rules, said transformation rules specifying how the content or parts of the content of said original metadata shall be used to constitute the content or part of the content of said unified metadata.

9. Apparatus according to claim 8, further **characterized by**
- means for presenting said derived unified metadata to a user;
- means for processing said derived unified metadata in response to a user input.
